# EUROPEAN PATENT APPLICATION

(11) **EP 2 107 768 A1**
(43) Date of publication of application: **07.10.2009**
(21) Application number: 08388015.3
(22) Date of filing: 04.04.2008
(51) Int. Cl.: H04M 1/253, H04M 7/00

(54) **Intelligent softphone interface**

(71) Applicant: GN Netcom A/S, 2750 Ballerup (DK)
(72) Inventor: Brorsbøl, Brian, 4000 Roskilde (DK)
(74) Representative: Kitchen, Steven Richard

(57) **Abstract**

An interface unit (100, 200, 300) comprising a communication device connection side (101, 201, 301) and a phone connection side (102, 202, 302) is described. The communication device connection side (101, 201, 301) comprises a first communication device interface (103, 203, 303). The phone connection side comprises at least a first softphone interface and a second softphone interface. Furthermore, the interface unit (100, 200, 300) comprises signal routing means adapted for routing audio signals between a communication device, such as a headset, connected to the first communication device interface (103, 203, 303) on the communication device connection side (101, 201, 301) and a first softphone (108, 208, 308) connected to the first softphone interface (104, 204, 304) and a second softphone (109, 209, 309) connected to the second softphone interface (105, 205, 305) on the phone connection side (102, 202, 302) of the interface unit (100, 200, 300).

## Description

The present invention relates to an interface unit comprising a communication device connection side and a phone connection side, the communication device connection side comprising a first communication device interface. The invention further relates to a kit of parts comprising an interface unit and a communication device, such as a headset, a system comprising an interface unit as well as a method of handling communication in a communication system.

It is well known in the art to connect a headset to a conventional public switched telephone network (PSTN) telephone as an alternative to a more traditional handset. Likewise, it is known to use a headset for telephony by connecting it to a computer running a softphone application, such as voice over IP (VoIP).

EP1710988 discloses a telephone system that may be connected to a PSTN line and a softphone simultaneously. US 2007 004473 discloses a wireless softphone headset system with incoming call alert and headset hookswitch control.

Softphone systems are becoming increasingly popular, e.g. due to low cost or even free long distance calls. Several different softphone systems, however, are competing and are generally incompatible, meaning that a call from a user of one application may only be received by a user of the same application. Therefore, it is often desirable to have more than one softphone application active on a single computer at the same time, to accommodate users of different softphone applications. However, this currently results in the risk of hardware or software conflicts when more than one softphone attempts to use the same hardware resources simultaneously, e.g. soundcard, headset, etc.

The objective of the invention is to provide a new and improved interface unit, a kit of parts and a system that allows for simultaneous connection of one or more communication devices, such as a headset, to two or more softphones. A further objective of the invention is to provide a method for handling communication in a communication system comprising at least one communication device and at least two softphones.

According to the invention, the objective is obtained by an interface unit that comprises a communication device connection side and a phone connection side. The communication device connection side comprises a first communication device interface. The phone connection side comprises at least a first softphone interface and a second softphone interface. Furthermore, the interface unit comprises signal routing means adapted for routing audio signals between a communication device, such as a headset, connected to the first communication device interface on the communication device connection side and a first softphone connected to the first softphone interface and a second softphone connected to the second softphone interface on the phone connection side of the interface unit. In this manner, a single communication device, such as a headset, may be used at the same time to handle multiple softphone applications running on a processor host, e.g. a computer. If a call is received on any interface on the phone connection side and the call is accepted by the user, the call is routed through the interface unit by the signal routing means to the communication device. The phone connection side may comprise three, four, five or even more softphone interfaces. The interface unit may for instance be provided as a dongle.

According to an embodiment of the invention, the communication device is a handheld device, such as a handset or a personal digital assistant (PDA), or a hand-free device, such as a headset, or a speakerphone. The communication device is preferably a headset, but may be any other suitable device comprising a speaker and a microphone.

According to an embodiment of the invention, the signal routing means comprises switching means for switching between concurrent calls on the first softphone interface and the second softphone interface. If, e.g., a second call is received on a second softphone connected to the second softphone interface, while a first call is in progress on a first softphone connected to the first softphone interface, the user may choose to reject the second call, to terminate the first call and switch to the second, or to put the first call on hold and answer the second call and at a later time return to the first call.

According to another embodiment of the invention, the signal routing means are adapted for simultaneously routing two or more concurrent calls between softphones connected to the phone connection side, respectively, and a communication device connected to the first communication device interface.

According to an alternative embodiment of the invention, the interface unit further comprises at least a first PSTN interface adapted for connection to a public switched telephone network (PSTN) line on the phone connection side. In this way, e.g. a single headset may be used to handle multiple softphones and conventional PSTN telephone lines at the same time. In this embodiment, the signal routing means is adapted to also allow switching between calls on softphones, between a call on a softphone and a PSTN line, or even between calls on two PSTN lines. The interface unit may comprise two, three, four or even more PSTN interfaces.

In a preferred embodiment of the invention, the first softphone interface and the second softphone interface on the phone connection side of the interface unit are provided as one physical connection. Preferably, the multiple softphone interfaces are provided as logical interfaces in one physical connection, e.g. a single universal serial bus (USB) connector. The physical connection may also include additional softphone interfaces. Thus, the interface unit may for instance be provided as a USB dongle.

In an alternative embodiment of the invention, the phone connection side comprises a plurality of physical connections, i.e. the phone connection side may comprise two or more USB connectors. Thus, the interface unit may for instance be connected to a number of separate computers, each of which may provide one or more softphone connections. The physical connections do not need to be of the same type, e.g. the phone connection side may comprise one USB connector and one IEEE 1394 connector, possibly being connected to separate computers.

According to an advantageous embodiment, the interface unit is adapted for connection to two, three, four or even more communication devices on the communication device connection side. This can for instance be through a corresponding number of wire connections or a corresponding number of wireless connections. Thereby, a number of e.g. headsets can be used for multi-unit conferencing.

In a preferred embodiment of the invention, at least the first softphone interface is a universal serial bus (USB) human interface device (HID) connection. The softphone interfaces of the interface unit are preferably provided as connections according to the telephony, LED (light emitting diode), and consumer commands usage page definitions, according to "Universal Serial Bus (USB), HID Usage Tables, version 1.12" (www.usb.org). Alternatively, the interface may be provided as a vendor specific usage page definition within the USB HID standard. In this way, the interface unit provides the computer with softphone interfaces according to common standards. This means that common operating systems most likely include low level software drivers to handle the hardware support for the interface unit out of the box. In some cases, even the connection between the softphone interfaces and the softphone application may be supported by standard drivers. In other cases, a high level driver may be used to translate calls from the interface unit to system calls and calls to the softphone applications on the computer. Such a driver, however, takes advantage of the low level support for USB HIDs found in most modem operating systems and may focus on providing application specific facilities.

According to the invention, at least the first communication device interface may be provided by any of the following technologies: by wire, Bluetooth, DECT, WLAN, ZigBee, HomeRF, or any other suitable wireless technology. Preferably, the first communication device interface is provided as a Bluetooth™ connection, using the Hands-Free Profile, version 1.5 or a later version (www.bluetooth.com), where the interface unit acts as the Audio Gateway and the communication device is to act as the Hands-free unit according to the profile specifications). Thus, the interface unit may be provided as a Bluetooth^{™} USB dongle.

According to an embodiment of the invention, the signal routing means is adapted to transmit control signals by use of a data protocol between the phone connection side and the communication device connection side. The control signals may be used to control the active softphone application and/or the operating system from the communication device, e.g. with respect to call initiation and termination, volume, muting of communication device microphone or speaker, acceptance or rejection of incoming calls, etc. Such control signals allow the user to configure the communication device from the computer, and subsequently transmitting the configuration settings to the communication device, e.g. setting the ring tone of the device or switching to silent mode, where the device vibrates on incoming call.

According to the invention, the objective is further obtained by a kit of parts comprising an interface unit according to the invention, in combination with a communication device, such as a headset. The communication device comprises interfacing means suitable for connecting the communication device to the interface unit. Preferably, the interface unit comprises a Bluetooth interface as the communication device interface, where the interface units acts as the audio gateway, according to the Bluetooth Hands-Free profile version 1.5 or a later version. Correspondingly, the communication device acts as the Hands-free unit according to the same profile. However, the communication device interface of the interface unit and the interfacing means of the communication device may use any other suitable wired or wireless technology of interconnection.

In a preferred embodiment of the invention, the communication device comprised in the kit of parts according to the invention comprises controlling means for controlling the signal routing means and/or the switching means. The controlling means may for instance be adjusted via a button on the communication device, thereby being able to switch between softphone connections. As such, the interface unit may also be part of the device itself, if for instance the communication device interface is provided as a wire.

The objective of the invention is furthermore obtained by a system comprising an interface unit according to the invention. The system also comprises a computer adapted for running at least a first softphone application and a second softphone application. The first and second softphone application comprises connection means adapted to be connected to the first and second softphone interfaces on the phone connection side of the interface unit. Furthermore, the system comprises at least a first communication device, such as a headset, comprising interfacing means suitable for connecting the communication device to the communication device connection side of the interface unit. The system enables the user to operate the two softphone applications with e.g. the same headset. The interface unit may comprise more than two softphone interfaces that may be connected to a corresponding number of softphone applications on the computer. The interface unit may also comprise one or more PSTN interfaces for connection to PSTN telephone lines. The connection means of the softphone applications and the softphone interfaces may be provided as software drivers.

In one embodiment of the system, the interface unit may be integrated with the computer, e.g. if the computer is a hand held device such as a personal digital assistant (PDA).

The final objective of the invention is obtained by a method of handling communication in a communication system comprising at least a first softphone, a second softphone, and a communication device, such as a headset. According to the method, the handling comprises the steps:
a) a first two-way call is in progress between the first softphone and the communication device, and
b) a second call is received via the second softphone,
c) the communication system signals the user of the communication device that a call is waiting.
   Step c) can be carried out by visually or audibly informing the user of the waiting call. Preferably, this method of handling communication is implemented by use of an interface unit or a system, according to the invention and the embodiments described above.

According to a preferred embodiment of the method according to the invention, after step c) the user may choose to:
i) reject the second call while the first call remains active,
ii) terminate the first call and answer the second call, or
ii) put the first call on hold and answer the second call, while the first call remains available for continuation. The user may interact with the softphones and the interface unit either from one or more buttons or controls on the communication device, or from the computer. Different button push patterns may be used to allow the user multiple commands from a single button, e.g. button tap to answer calls or to end active calls and activate held or waiting calls, button press or double tap to reject incoming calls or to switch between calls. The same method may be used if one or both of the first and second calls are conventional phone calls on a PSTN line.

The invention is explained in detail below with reference to the drawings, in which
Fig. 1 is a schematic view of one embodiment of the invention,
Fig. 2 is a schematic view of a second embodiment of the invention,
Fig. 3 is a schematic view of a third embodiment of the invention,
Fig. 4 is a flow chart of a call scenario according to the invention, and
Fig. 5 is a flow chart of a further call scenario according to the invention.

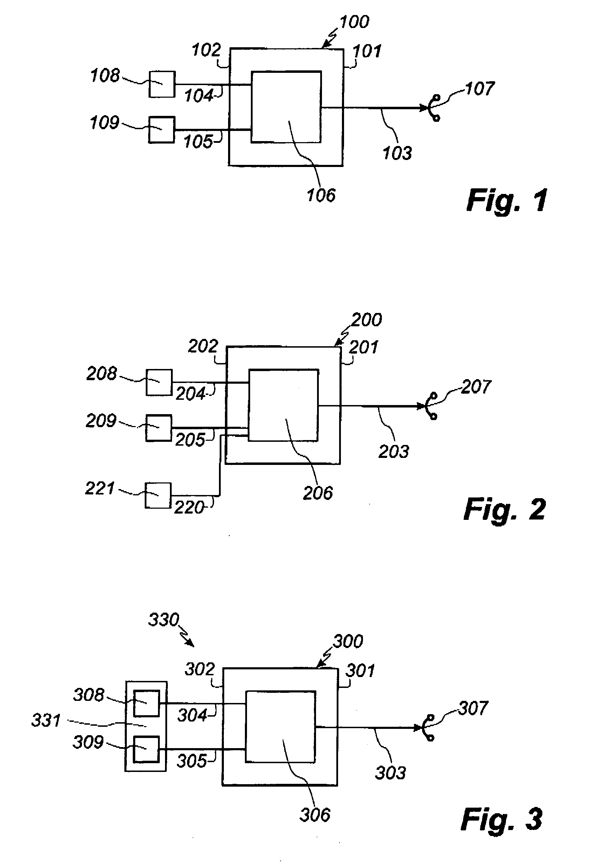

Fig. 1 illustrates an interface unit 100 according to the invention. The interface unit 100 comprises a communication device connection side 101 and a phone connection side 102. The communication device connection side 101 comprises a first communication device interface 103 suitable for connecting the interface unit 100 to, e.g., a headset 107. The communication device 107 is connected to the communication device interface 103 by use of a Bluetooth^{™} connection utilizing the Hand-Free profile (version 1.5 or later), where the interface unit 100 is the audio gateway and the communication device 107 is to act as the hand-free device in accordance with the specifications for the Hand-Free profile.

The phone connection side 102 of the interface unit 100 comprises a first softphone interface 104 that may be connected to a first softphone 108, and a second softphone interface 105 that may be connected to a second softphone 109. The interface unit 100 may comprise additional softphone interfaces that may be connected to a corresponding number of softphones. The first and second softphone interfaces 104, 105 are each provided as a universal serial bus (USB) human interface device (HID), both using a single USB connector. Such interface devices are subject to a HID specification, see also http://www.usb.org/. Accordingly, the USB HID Telephony, LED (light emitting diode), and Consumer usage pages known from this specification are preferably used for the softphone interfaces. Alternatively, a vendor specific usage page may be used, within the framework of the HID specification. Thus, the interface unit 100 is preferably provided as a USB Bluetooth^{™} dongle. Connection to e.g. Microsoft's® Office Communicator^{™} may be provided using the standard USB HID Telephony, LED, and Consumer usage pages, while connection to e.g. Skype^{™} may be provided using a vendor specific usage page in connection to a software driver.

Furthermore, the interface unit 100 comprises signal routing means 106 suitable for establishing audio links between the connected softphones 108, 109 to the communication device 107 as needed to take part in a call. Additionally, the signal routing means may be adapted for transmitting control signals, both to and from the communication device, e.g. for configuration of the communication device, and to control the active softphone application from the communication device.

Fig. 2 shows another embodiment of the interface unit 200, corresponding to the embodiment in Fig. 1, where like reference numerals refer to like parts. Therefore, only the differences between the two embodiments are described here. In this embodiment, the interface unit 200 further comprises a PSTN interface 220 on the phone connection side 202. This PSTN interface 220 is adapted for connecting the interface unit 200 to a conventional public switched telephone network (PSTN) line 221. In this embodiment, the signal routing means 206 is further adapted for establishing an audio link between the PSTN line 221 and the communication device 207 as needed for the communication device user to take part in a PSTN call.

Fig. 3 shows a system 330 comprising an interface unit 300 that corresponds to the interface unit 100 in Fig. 1, where like reference numerals refer to like parts. Therefore, only the differences between the two figures are described here. In addition to the interface unit 300, the system 330 comprises a communication device, such as a headset 307 that is connected to the communication device interface 303 of the interface unit 300 by a Bluetooth^{™} connection, or another suitable wired or wireless connection. The communication device 307 may be equipped with controlling means, such as buttons, for controlling the signal routing means 306 and/or switching means, e.g. for volume control and hookswitch control. Furthermore, the system 330 comprises a computer 331 providing the first and second softphones 308, 309, e.g. by running two softphone applications. Additionally, the computer 331 provides softphone connection means, e.g. in the form of software drivers, for connecting the softphone applications to the softphone interfaces 304, 305 of the interface unit 300.

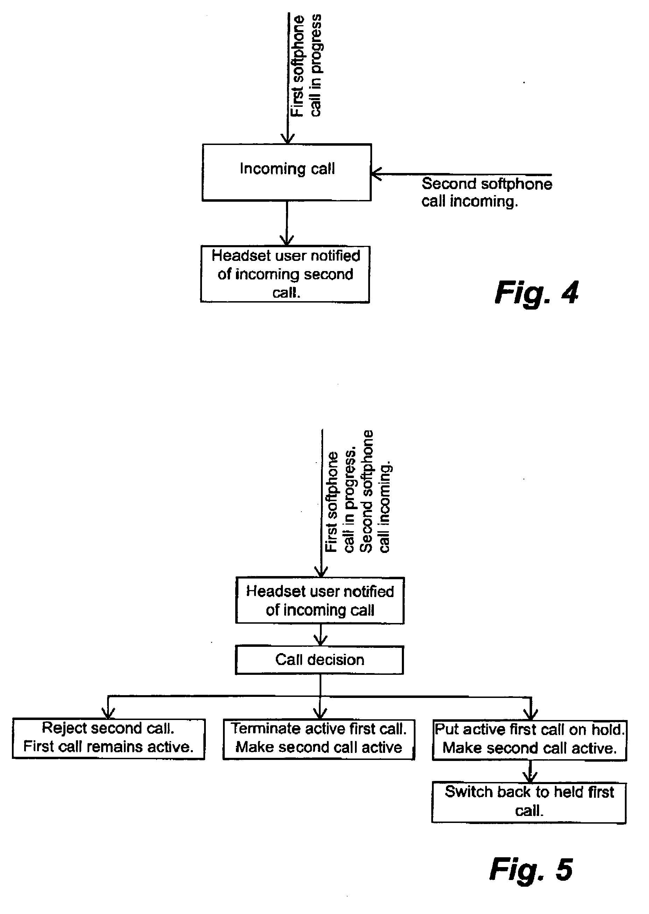

Fig. 4 illustrates handling of communication, according to the invention, in a communication system that comprises two softphones and a communication device. A first softphone call is in progress on the first softphone, either as an incoming or outgoing call. During this first call, a second softphone call is incoming. The communication device user is notified of the incoming second call. Notification of the communication device user may take place audibly by playing a sound in the communication device speaker. Alternatively, notification may take place visually, by having a control light, which is placed visible to the user, e.g. either on the communication device or on the interface unit, signal by steady or flashing light that a call is waiting.

Fig. 5 illustrates that after the communication device user has been notified of the incoming call, the user is faced with a decision between three choices regarding the first and second call, according to an embodiment of the invention. The first option is to reject the incoming second call, either by user action or simply by waiting for the second caller to abort the call, during which the first call remains active. The second option is to terminate the first call and answer the second call. The third and final option is to put the currently active first call on hold, answer the incoming second call, thus making the second call active. At a later time, the communication device user may then return to the held first call, either as the second call is terminated, or by putting the second call on hold.

The invention has been described with reference to preferred embodiments. Modifications and variations obvious to those skilled in the art are considered to fall within the scope of the present invention. For example, the communication device may be a headset, but may also be another type of hand-free device, such as a speakerphone, or e.g. a handset, or a personal digital assistant. Connection may be provided by other means than Bluetooth™, e.g. by other wireless technologies or by a wire connection. Likewise, the softphone connection may also be made with any other suitable connection means besides USB, e.g. IEEE 1394. Finally, an interface unit comprising more than one communication device interface, and/or more than two softphone interfaces is also conceivable and considered to fall within the scope of the invention.

### Reference numeral list

- 100, 200, 300: Interface unit
- 101, 201, 301: Communication device connection side
- 102, 202, 302: Phone connection side
- 103, 203, 303: First communication device interface
- 104, 204, 304: First softphone interface
- 105, 205, 305: Second softphone interface
- 106, 206, 306: Signal routing means
- 107, 207, 307: Communication device
- 108, 208, 308: First softphone
- 109,209,309: Second softphone
- 220: First PSTN interface
- 221: First PSTN line
- 330: System
- 331: Computer

## Claims

1. Interface unit (100, 200, 300) comprising a communication device connection side (101, 201, 301) and a phone connection side (102, 202, 302), the communication device connection side (101, 201, 301) comprising a first communication device interface (103, 203, 303), **characterised in that**
- the phone connection side (102, 202, 302) comprises at least a first softphone interface (104, 204, 304) and a second softphone interface (105, 205, 305), wherein
- the interface unit (100, 200, 300) further comprises signal routing means (106, 206, 306) adapted for routing audio signals between a communication device (107, 207. 307), such as a headset, connected to the first communication device interface (103, 203, 303) on the communication device connection side (101, 201, 301) and a first softphone (108, 208, 308) connected to the first softphone interface (104, 204, 304) and a second softphone (109, 209, 309) connected to the second softphone interface (105, 205, 305) on the phone connection side (102, 202, 302) of the interface unit (100, 200, 300).

2. Interface unit (100, 200, 300) according to claim 1, wherein the communication device (107, 207, 307) is a handheld device, such as a handset or a personal digital assistant (PDA), or a hand-free device, such as a headset, or a speakerphone.

3. Interface unit (100, 200, 300) according to claim 1 or 2, wherein the signal routing means (106, 206, 306) comprises switching means for switching between concurrent calls on the first softphone interface (104, 204, 304) and the second softphone interface (105, 205, 305).

4. Interface unit (100, 200, 300) according to any of the preceding claims, wherein the signal routing (106, 206, 306) means are adapted for simultaneously routing two or more concurrent calls between softphones connected on the phone connection side (102, 202, 302), respectively, and a communication device (107, 207, 307) connected to the first communication device interface (103, 203, 303).

5. Interface unit (100, 200, 300) according to any of the preceding claims, further comprising at least a first PSTN interface (220) adapted for connection to a public switched telephone network (PSTN) line (221) on the phone connection side (102, 202, 302).

6. Interface unit (100, 200, 300) according to any of the preceding claims, wherein the first softphone interface (104, 204, 304) and the second softphone interface (105, 205, 305) on the phone connection side (102, 202, 302) of the interface unit (100, 200, 300) are provided as one physical connection.

7. Interface unit (100, 200, 300) according to any of the preceding claims, wherein the phone connection side (102, 202, 302) comprises a plurality of physical connections.

8. Interface unit (100, 200, 300) according to any of the preceding claims, wherein at least the first softphone interface (104, 204, 304) is a universal serial bus (USB) human interface device (HID) connection.

9. Interface unit (100, 200, 300) according to any of the preceding claims, wherein at least the first communication device interface (103, 203, 303) is provided by any of the following technologies: by wire, Bluetooth, DECT, WLAN, ZigBee, HomeRF, or any other suitable wireless technology.

10. Interface unit (100, 200, 300) according to any of the preceding claims, wherein the signal routing means (106, 206, 306) is adapted to transmit control signals by use of a data protocol between the phone connection side (102, 202, 302) and the communication device connection side (101, 201, 301).

11. Kit of parts comprising an interface unit (100, 200, 300) according to any of the preceding claims, in combination with a communication device (107, 207, 307), such as a headset, wherein the communication device (107, 207, 307) comprises interfacing means suitable for connecting the communication device (107, 207, 307) to the interface unit (100, 200, 300).

12. Kit of parts according to claim 11, wherein the communication device (107, 207, 307) comprises controlling means for controlling the signal routing means (106, 206, 306) and/or the switching means.

13. System comprising
- an interface unit (100, 200, 300) according to any of claims 1-10,
- a computer (331) adapted for running at least a first softphone application (108, 208, 308) and a second softphone application (109, 209, 309), the first and second softphone application comprising connection means adapted to be connected to the first (104, 204, 304) and second (105, 205, 305) softphone interfaces on the phone connection side (102, 202, 302) of the interface unit (100, 200, 300), and
- at least a first communication device (107, 207, 307), such as a headset, comprising interfacing means suitable for connecting the communication device (107, 207, 307) to the communication device connection side (101, 201, 301) of the interface unit (100, 200, 300).

14. Method of handling communication in a communication system comprising at least a first softphone, a second softphone, and a communication device, such as a headset, wherein
a) a first two-way call is in progress between the first softphone and the communication device, and
b) a second call is received via the second softphone,
c) the communication system signals the user of the communication device that a call is waiting.

15. Method according to claim 14, wherein the user after step c) may choose to:
i) reject the second call while the first call remains active,
ii) terminate the first call and answer the second call, or
ii) put the first call on hold and answer the second call, while the first call remains available for continuation.
